# EUROPEAN PATENT APPLICATION

(11) **EP 4 635 714 A1**
(43) Date of publication of application: **22.10.2025**
(21) Application number: 25170797.2
(22) Date of filing: 15.04.2025
(51) Int. Cl.: B29C 49/42, B29C 49/46, B29C 49/04, B29C 49/06, B29C 49/12, B29K 67/00, B29L 31/00

(54) **METHOD OF ASEPTICALLY FORMING A CONTAINER WITH A FLUID**

(30) Priority: 15.04.2024 US 202463634112 P
(71) Applicant: Discma AG, 6331 Hünenberg (CH)
(72) Inventor: SEIDL, Edward, Michigan, 48076 (US)
(74) Representative: Meissner Bolte UK

(57) **Abstract**

A method of forming and sterilizing a container includes steps of locating a container precursor within a mold cavity having an internal surface, dispensing a sterilizing liquid into the container precursor to expand the container precursor toward the internal surface of the mold cavity to form a resultant container having an interior defined by an interior surface of the resultant container with the sterilizing liquid sterilizing the interior surface of the resultant container during the dispensing of the sterilizing liquid, draining the sterilizing liquid from the interior of the resultant container, rinsing the interior of the resultant container with a rinsing liquid following the draining of the sterilizing liquid, dispensing an end product into the interior of the resultant container following the rinsing of the interior of the resultant container, and sealing the interior of the resultant container following the dispensing of the end product therein.

## Description

### CROSS-REFERENCE TO RELATED PATENT APPLICATION

This patent application claims priority to U.S. Provisional Patent Application Serial No. 63/634,112, filed on April 15, 2024, the entire disclosure of which is hereby incorporated herein by reference.

### FIELD

The present technology relates to simultaneously aseptically forming and filling a container using a fluid, and more particularly, forming and filling a container with a liquid that aseptically forms the container and is subsequently drained from the container prior to the container being filled with an end product in a contamination free manner.

### INTRODUCTION

This section provides background information related to the present disclosure which is not necessarily prior art.

Many products that were previously packaged using glass containers are now being supplied in plastic containers, such as containers that are fabricated from polyesters, such as polyethylene terephthalate (PET), for example.

Plastic containers are typically manufactured using the well-known stretch blow molding process. This involves the use of a pre-molded preform having a threaded portion and a closed distal end. The preform is first heated and then is longitudinally stretched and subsequently inflated within a mold cavity so that it assumes the desired final shape of the container. As the preform is inflated, it elongates and stretches, taking on the shape of the mold cavity. The polymer solidifies upon contacting the cooler surface of the mold, and the finished hollow container is subsequently ejected from the mold.

Another conventional process for fabricating plastic containers is the extrusion blow molding process, in which a continuously extruded hot plastic tube or parison is captured within a mold and inflated against the inner surfaces of the mold to form a container blank. The mold is typically designed to travel at the speed at which the extruded parison is moving when it closes on the parison so that the process can operate on a continuous basis. There are several different types of extrusion blow molding machines, including shuttle molds that are designed to travel in a linear motion and extrusion blow molding wheels that travel in a rotary or circular motion.

Such blow molding process typically utilize a gas (air) to expand the preform or parison against the mold cavity when producing such a plastic container. However, it has been found that the use of a liquid expansion means is more energy efficient than the use of a gas, hence it has been proposed to utilize a liquid in applying the pressure to the preform or parison when expanding the preform or parison to the desired shape and configuration. An especially efficient process has been proposed wherein the end product to be disposed within the resultant container is utilized as the liquid expansion means, thereby eliminating process steps associated with transporting the container from the corresponding blow molding station after the formation thereof and then subsequently dispensing the end product to the interior of the recently formed container, among other possible intermediate process steps.

Additionally, many different end products, such as beverages or flowable food items (salad dressings, condiments, sauces, etc.), often include the need for sterilization to avoid the introduction of bacteria or other contaminants therein when disposed within such blow molded plastic containers. One common method of performing such sterilization includes the use of a hot filling process wherein the flowable food or beverage is heated to a relatively high temperature, such as a temperature between 194°F and 203°F, prior to or during the process of dispensing the flowable food or beverage to the interior of the blow molded plastic container, thereby sterilizing both the product and the surfaces of the container exposed to the product. An especially efficient hot filling process may accordingly include the heating of the flowable food or beverage prior to the use thereof as the expansion means of an associated blow molding process, wherein the heated flowable food or beverage expands the corresponding preform or parison within the mold cavity before being retained therein as the end product.

However, the use of a hot filling process as described above presents numerous concerns, and especially with respect to certain end products that may be adversely affected by exposure to such high temperatures. For example, certain food or beverage products may undesirably be affected by the increase in temperature in a manner affecting properties of the end product, such as the shelf-life, color, consistency, or flavor thereof, which can be disconcerting to an end consumer.

Another concern related to the use of a hot filling process relates to the effects on the container following the introduction of the relatively hot food or beverage product. As the hot product cools, the product may contract within the container in a manner creating a vacuum effect therein. In order to accommodate such a pressure differential across the container, it may be necessary to produce the container with a complex configuration allowing for flexing of the container during the cooling process, such as introducing panels or other surface features within the walls of the container that can move in reaction to the varying pressure within the interior of the container as the cooling of the food or beverage proceeds. The need for the formation of such features within the container can add undesired complexity to the process utilized in forming the container.

Thus, there is a need for an aseptic blow molding process that appreciates both the benefits of the use of a liquid as a means to expand a preform or parison in forming the container while also avoiding the need to elevate the temperature of the end product dispensed to the interior of the container as a means to sterilize the end product and the container in which the end product is received.

### SUMMARY

The present technology includes articles of manufacture, systems, and processes that relate to use of a sterilizing liquid to fill and form a container under certain pressure conditions, where the sterilizing liquid acts as a sterilant/disinfectant that is subsequently removed from the container for accommodating the introduction of an end product therein in a sterile and aseptic manner.

According to the present invention, a method of forming and sterilizing a container includes steps of locating a container precursor within a mold cavity having an internal surface, dispensing a sterilizing liquid into the container precursor to expand the container precursor toward the internal surface of the mold cavity to form a resultant container having an interior defined by an interior surface of the resultant container with the sterilizing liquid sterilizing the interior surface of the resultant container during the dispensing of the sterilizing liquid, draining the sterilizing liquid from the interior of the resultant container, rinsing the interior of the resultant container with a rinsing liquid following the draining of the sterilizing liquid, dispensing an end product into the interior of the resultant container following the rinsing of the interior of the resultant container, and sealing the interior of the resultant container following the dispensing of the end product therein.

Systems for simultaneously forming and filling a container include a mold cavity and a blow nozzle. The mold cavity defines an internal surface and is configured to accept a preform therein. The blow nozzle is configured to transfer the sterilizing liquid into the preform to urge the preform to expand toward the internal surface of the mold cavity and form a resultant container, where the sterilizing liquid remains within the container to aid in sterilizing the internal surface of the resultant container.

Aspects of such systems can further include a pressure source providing the sterilizing liquid to the blow nozzle. Embodiments of the pressure source can have an inlet, a chamber, an outlet, and a mechanically driven piston-like device moveable within the chamber in a first direction to draw the sterilizing liquid into the chamber through the inlet and moveable in a second direction to urge the sterilizing liquid out of the chamber through the outlet. The piston-like device can be one of a piston, a pump, and an accumulator. Systems can include a stretch rod configured to mechanically stretch the preform within the mold cavity prior to the sterilizing liquid being transferred into the preform by the blow nozzle, where the stretch rod can be vented.

Methods of aseptically forming and filling a container include dispensing a sterilizing liquid to a blow nozzle, where the blow nozzle is configured to transfer the sterilizing liquid at a first pressure into a preform within a mold cavity. The mold cavity defines an internal surface where the preform is expanded toward the internal surface of the mold cavity using the sterilizing liquid to form a resultant container. The sterilizing liquid remains within the resultant container for a period of time to aid in sterilizing the internal surface of the resultant container.

Aspects of such methods can further include providing the sterilizing liquid to the blow nozzle using a pressure source. Embodiments of the pressure source can have an inlet, a chamber, an outlet, and a mechanically driven piston-like device moveable within the chamber in a first direction to draw a liquid into the chamber through the inlet and moveable in a second direction to urge the liquid out of the chamber through the outlet. A stretch rod can be used to mechanically stretch the preform within the mold cavity. Expanding the preform toward the internal surface of the mold cavity using the sterilizing liquid to form a resultant container can also include venting the preform through the stretch rod.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and thus are not intended to limit the scope of the present disclosure.
FIG. 1 is a partially schematic cross-sectional depiction of a heated preform passed into an injection mold station wherein a pressure source including a piston-like device begins to move upward, drawing a sterilizing liquid into the pressure source.
FIG. 2 is a partially schematic cross-sectional depiction of the injection mold station illustrated in FIG. 1 wherein a stretch rod extends into the preform to initiate mechanical stretching and wherein the sterilizing liquid continues to accumulate in the pressure source.
FIG. 3 is a partially schematic cross-sectional depiction of the injection mold station of FIG. 2 wherein the piston-like device drives the sterilizing liquid from the pressure source to the preform thereby expanding the preform toward the walls of the mold cavity.
FIG. 4 is a partially schematic cross-sectional depiction of the injection mold station of FIG. 3 wherein the piston-like device has been fully actuated thereby completely transferring an appropriate volume of sterilizing liquid to the newly formed container and wherein the stretch rod is withdrawing.
FIG. 5 is a partially schematic cross-sectional depiction of the injection mold station of FIG. 4 wherein the mold halves separate and the piston-like device begins to draw liquid into the pressure source in preparation for the next cycle.
FIG. 6 is a partially schematic cross-sectional view of a filling station for filling the container produced by the injection mold station of FIGS. 1-5.
FIG. 7 is a block diagram illustrating an aseptic filling environment including the injection mold station of FIGS. 1-5, an exterior spraying apparatus, a container drying apparatus, a container rinsing apparatus, a container drying apparatus, the filling station of FIG. 6, and a container sealing apparatus, wherein the aseptic filling environment is utilized in forming a sterile container according to a method of the present invention.
FIG. 8 is a partially schematic cross-sectional depiction of a system having an integrated extrusion die head and blow nozzle according to an embodiment of the invention.
FIG. 9 is a partially schematic cross-sectional depiction of the system of FIG. 8 following a capturing of a portion of a parison within a mold and sealing engagement between the portion of the parison and the blow nozzle.
FIG. 10 is a partially schematic cross-sectional depiction of the system of FIG. 9 following an inflating of the captured portion of the parison against the mold via introduction of a sterilizing liquid through the blow nozzle.
FIG. 11 is a partially schematic cross-sectional depiction of a system having an extrusion die head and an independently provided blow nozzle according to another embodiment of the invention.
FIG. 12 is a partially schematic cross-sectional depiction of the system of FIG. 11 following a capturing of a portion of a parison within a mold and sealing engagement between the portion of the parison and the blow nozzle.
FIG. 13 is a partially schematic cross-sectional depiction of the system of FIG. 12 following an inflating of the captured portion of the parison against the mold via introduction of a sterilizing liquid through the blow nozzle.

### DETAILED DESCRIPTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

All documents, including patents, patent applications, and scientific literature cited in this detailed description are incorporated herein by reference, unless otherwise expressly indicated. Where any conflict or ambiguity can exist between a document incorporated by reference and this detailed description, the present detailed description controls.

Although the open-ended term "comprising," as a synonym of non-restrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, all compositional percentages are by weight of the total composition, unless otherwise specified. Disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

The present technology allows for simultaneously forming and filling a container using a sterilizing liquid to rapidly and aseptically provide a liquid-filled container. Apparatuses, systems, and methods provided herein make use of a mold cavity that defines an internal surface and that is configured to accept a preform or parison. As utilized herein, the preform or the parison, depending on which method of blow molding is used, may generally be referred to as a container precursor. A blow nozzle operates to transfer the sterilizing liquid into the container precursor to urge the container precursor to expand toward the internal surface of the mold cavity and form a resultant container, where the sterilizing liquid remains within the resultant container temporarily to aseptically disinfect and sterilize an interior surface of the resultant container.

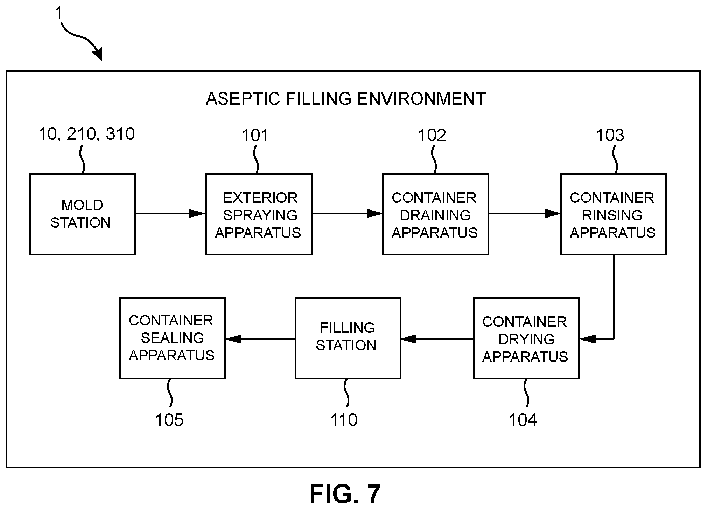

The method according to the present invention may include the use of various apparatuses disposed within an aseptic filling environment 1 (FIG. 7), wherein the processes described hereinafter are performed within what may be referred to as a clean room of the aseptic filling environment 1. All of the components of the resulting product, including the packaging thereof, may be sterilized prior to or during the disclosed method to ensure that contaminants, such as bacteria contaminants or other debris, are not introduced at any point in the described processes. Once filled, the resulting product may be sealed until it is consumed, thereby preventing any potential for the introduction of bacteria or other contaminants at the conclusion of the described method.

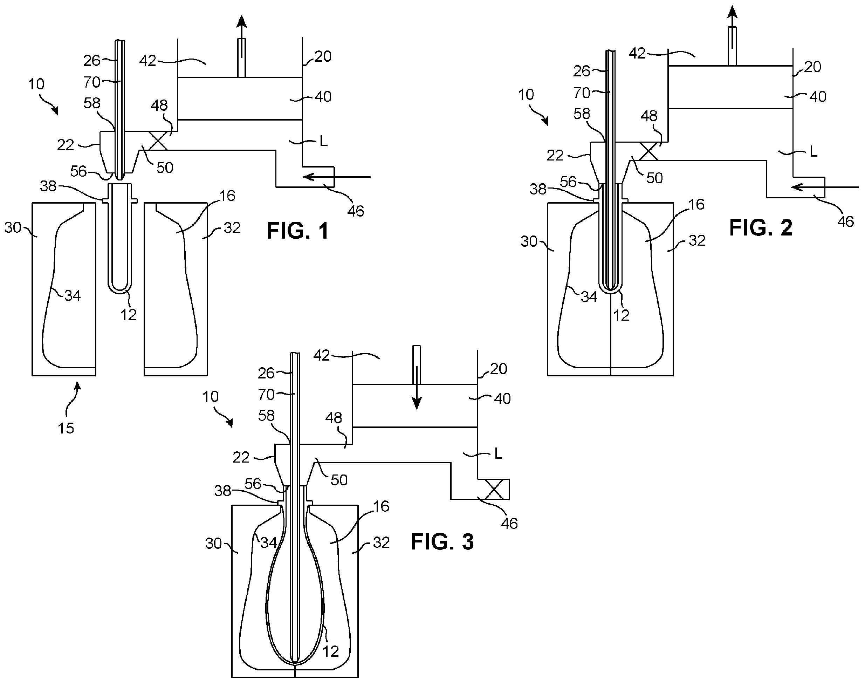

With reference to FIGS. 1-5, a mold station 10 for introducing the sterilizing liquid in forming and filling a container C is disclosed, wherein the mold station 10 may be disposed within the previously described aseptic filling environment 1. The mold station 10 and associated method utilizes a sterilizing liquid L to impart the pressure required to expand a preform 12 to take on the shape of a mold 15, thus simultaneously forming and filling the resultant container C. The sterilizing liquid L may be any suitable sterilizing liquid that does not undesirably affect the process of molding the container C, with representative and non-limiting examples being peracetic acid (PAA) or hydrogen peroxide (H₂O₂).

The mold station 10 for simultaneously filling and forming the container C generally includes a mold cavity 16, a pressure source 20, a blow nozzle 22, and a stretch rod 26, wherein the stretch rod 26 may in some circumstances be optionally included in the mold station 10. The exemplary mold cavity 16 illustrated includes mold halves 30, 32 that cooperate to define an interior surface 34 corresponding to a desired outer profile of the blown container C. The mold cavity 16 may be moveable from an open position (see FIG. 1) to a closed position (FIG. 3) such that a support ring 38 of the preform 12 is captured at an upper end of the mold cavity 16.

The preform 12 may have a shape well known to those skilled in the art and may thus be similar to a test-tube with a generally cylindrical cross section and a length typically approximately fifty percent (50%) that of the resultant container C height, although alternative preform configurations may be utilized without departing from the scope of the present disclosure. The support ring 38 may be used to carry or orient the preform 12 through and at various stages of manufacture. For example, the preform 12 may be carried by the support ring 38, the support ring 38 may be used to aid in positioning the preform 12 in the mold cavity 16, or an end consumer may use the support ring 38 to carry the plastic container C once manufactured. A portion of the preform 12 disposed axially outwardly beyond the support ring 38 may include threads configured for coupling a cap to the container C resulting from the blow molding of the preform 12.

The preform 12 can be introduced to the mold station 10 at or above a phase change/solidification temperature of a material from which the preform 12 is formed. For example, the preform 12 can be heated or preheated to about the melting point of the material from which the preform 12 is made. As known in the art, various plastics and polymer types, including blends thereof, can be used in blow molding. However, one preferred plastic that can be used in conjunction with the present technology is polyethylene terephthalate (PET). The preform can be heated or preheated to a temperature between about 190°F and about 250°F (approximately 88°C to 121°C).

In one example, the pressure source 20 can be in the form of, but not limited to, a filling cylinder, manifold, or chamber 42 that generally includes a mechanical piston-like device 40 including, but not limited to, a piston, a pump (such as a hydraulic pump) or any other such similarly suitable device, moveable within the filling cylinder, manifold, or chamber 42. The pressure source 20 has an inlet 46 for accepting the sterilizing liquid L and an outlet 48 for delivering the sterilizing liquid L to the blow nozzle 22. It is appreciated that the inlet 46 and the outlet 48 may have valves incorporated therewith. The piston-like device 40 may be moveable in a first direction (upward as viewed in the figures) to draw the sterilizing liquid L from the inlet 46 into the filling cylinder, manifold, or chamber 42, and in a second direction (downward as viewed in the figures) to deliver the sterilizing liquid L from the filling cylinder, manifold, or chamber 42 to the blow nozzle 22. The piston-like device 40 can be moveable by any suitable method such as pneumatically, mechanically, or hydraulically, for example. The inlet 46 of the pressure source 20 may be connected, such as by tubing or piping, to a reservoir or container (not shown) which contains the sterilizing liquid L. It is appreciated that the pressure source 20 may be configured differently, so long as a desired quantity of the sterilizing liquid L is delivered to the blow nozzle 22 at a desired pressure.

The blow nozzle 22 generally defines an inlet 50 for accepting the sterilizing liquid L from the outlet 48 of the pressure source 20 and an outlet 56 (FIG. 1) for delivering the sterilizing liquid L into the preform 12. It is appreciated that the outlet 56 may define a shape complementary to the preform 12 near the support ring 38 such that the blow nozzle 22 may easily mate with the preform 12 during the forming/filling process. In one example, the blow nozzle 22 may define an opening 58 for slidably accepting the stretch rod 26 used to initiate mechanical stretching of the preform 12.

In one example, the sterilizing liquid L may be introduced into the plastic container C under ambient or cold temperatures. Accordingly, by way of example, the plastic container C may be filled at ambient or cold temperatures such as between approximately 32°F to 90°F. (approximately 0°C to 32°C), and more preferably at approximately 40°F (approximately 4.4°C). The aseptic nature of the sterilizing liquid L results in the lack of need for a heating of the sterilizing liquid L prior to introduction into the preform 12, thereby avoiding the need for a hot-filling process to be employed. The use of the sterilizing liquid L may also result in the ability to introduce the preform 12 to the mold station 10 at a temperature below 212°F (100°C), which may correspond to a temperature at which the preform 12 may normally be considered to be sterilized and free of bacterial contamination.

In use, the mold station 10 is configured to simultaneously fill and form the plastic container C. At the outset, the preform 12 may be placed into the mold cavity 16. In one example, a machine (not illustrated) places the preform 12 heated to the temperature between approximately 190°F to 250°F (approximately 88°C to 121°C) into the mold cavity 16. As the preform 12 is located into the mold cavity 16, the piston-like device 40 of the pressure source 20 may begin to draw the sterilizing liquid L into the filling cylinder, manifold, or chamber 42 through the inlet 46. The mold halves 30, 32 of the mold cavity 16 may then close thereby capturing the preform 12. The blow nozzle 22 may form a seal at a finish of the preform 12. In some embodiments, the mold cavity 16 may be heated to a temperature between approximately 250°F to 350°F (approximately 93°C to 177°C) in order to impart increased crystallinity levels within the resultant container C. In another example, the mold cavity 16 may be provided at ambient or cold temperatures between approximately 32°F to 90°F (approximately 0°C to 32°C). The sterilizing liquid L may continue to be drawn into the filling cylinder, manifold, or chamber 42 by the piston-like device 40.

As shown in FIG. 2, the stretch rod 26 may extend axially into the preform 12 to initiate mechanical stretching. At this point, the sterilizing liquid L may continue to be drawn into the filling cylinder, manifold, or chamber 42 via continued upward motion of the piston-like device 40. The stretch rod 26 continues to stretch the preform 12, thereby thinning the sidewalls of the preform 12 as the axial length thereof is increased. The volume of sterilizing liquid L in the filling cylinder, manifold, or chamber 42 may increase until the appropriate volume suitable to form and fill the resultant container C is reached. At this point, a valve disposed at the inlet 46 of the pressure source 20 may be closed.

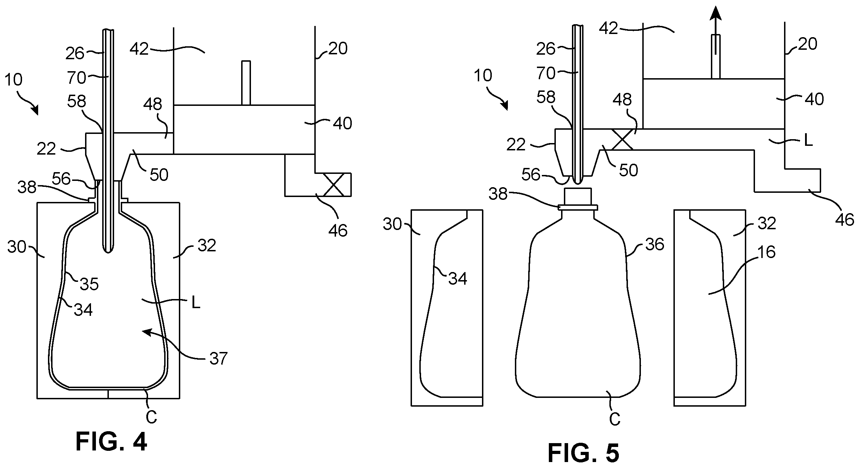

As shown in FIG. 3, the piston-like device 40 may begin to drive downward (drive phase) to initiate the rapid transfer of sterilizing liquid L from the filling cylinder, manifold, or chamber 42 to the preform 12. Again, the piston-like device 40 may be actuated by any suitable means such as pneumatic, mechanical and/or hydraulic pressure. In one example, the hydraulic pressure within the preform 12 may reach between approximately 100 PSI to 600 PSI. The sterilizing liquid L causes the preform 12 to expand toward the interior surface 34 of the mold cavity 16. Residual air may be vented through a passage 70 defined in the stretch rod 26 (FIG. 3). As shown in FIG. 4, the piston-like device 40 has completed its drive phase, thereby completely transferring the appropriate volume of sterilizing liquid L to the newly formed plastic container C. Next, the stretch rod 26 may be withdrawn from the mold cavity 16 while continuing to vent residual air. The stretch rod 26 may be designed to displace a predetermined volume of sterilizing liquid L when it is withdrawn from the mold cavity 16, thereby allowing the desired fill level of the sterilizing liquid L to be achieved within the resultant plastic container C. Generally, the desired fill level will correspond to a level at or near the level of the support ring 38 of the plastic container C.

Alternatively, the sterilizing liquid L can be provided at a constant pressure or at different pressures during the molding cycle. For example, during axial stretching of the preform 12, the sterilizing liquid L may be provided at a pressure which is less than the pressure applied when the preform 12 is blown into substantial conformity with the interior surface 34 of the mold cavity 16 defining the final configuration of the plastic container C. This lower pressure P1 may be ambient or greater than ambient, but less than the subsequent high pressure P2. The preform 12 is axially stretched in the mold cavity 16 to a length approximating the final length of the resultant plastic container C. During or just after stretching the preform 12, the preform 12 is generally expanded radially outward under the relatively low pressure P1. This low pressure P1 is preferably in the range of between approximately 100 PSI to 150 PSI. Subsequently, the preform 12 is further expanded under the relatively high pressure P2 such that the preform 12 contacts the interior surface 34 of the mold halves 30, 32 thereby forming the resultant plastic container C. Preferably, the high pressure P2 is in the range of approximately 500 PSI to 600 PSI. As a result of the above method, the base and contact ring of the resultant plastic container C is fully circumferentially formed.

Optionally, more than one piston-like device may be employed during the formation of the resultant plastic container C. For example, a primary piston-like device may be used to generate the low pressure P1 to initially expand the preform 12 while a secondary piston-like device may be used to generate the subsequent high pressure P2 to further expand the preform 12 such that the preform 12 contacts the interior surface 34 of the mold halves 30, 32, thereby forming the resultant plastic container C.

As shown in FIG. 5, the fill cycle is shown completed. The mold halves 30, 32 may separate and the blow nozzle 22 may be withdrawn. The described process accordingly results in the formation of the container C as well as the sterilization of an interior surface 35 of the container C defining an interior 37 of the container C. At this point, the piston-like device 40 may begin the next cycle by drawing the sterilizing liquid L through the inlet 46 of the pressure source 20 in preparation for the next fill/form cycle. While not specifically shown, it is appreciated that the mold station 10 may include a controller for communicating signals to the various components of the mold station 10 for prescribing the operation thereof in accordance with the methods disclosed herein. In this way, components such as, but not limited to, the mold cavity 16, the blow nozzle 22, the stretch rod 26, the piston-like device 40, and various valves may operate according to a signal communicated by the controller. It is also contemplated that the controller may be utilized to adjust various parameters associated with these components according to a given application.

As mentioned above, the introduction of the sterilizing liquid L during the injection molding process results in the sterilization of the interior surface 35 of the container C, but does not result in a sterilization of an exterior surface 36 of the container C. The method according to the present invention may thus include an additional step of exposing the exterior surface 36 of the container C to the sterilizing liquid L to ensure that all exposed surfaces of the container C are suitably sterilized prior to the eventual introduction of an end product P into the container C. The exposure of the exterior surface 36 of the container C to the sterilizing liquid L may take the form of one of a variety of different processes via the use of various apparatuses. In some embodiments, the exposure of the exterior surface 36 of the container C to the sterilizing liquid L may include the introduction of an additional quantity of the sterilizing liquid L to the interior 37 of the container C to cause the sterilizing liquid L already contained therein to start overflowing the interior 37 of the container C and flowing over the exterior surface 36 thereof. According to another embodiment, the container C may be submerged into a bath of the sterilizing liquid 37 to cover the exterior surface 36. According to yet another embodiment, the exterior surface 36 of the container C may be sprayed, splashed, or otherwise showered with the sterilizing liquid L. In FIG. 7, the process of exposing the exterior surface 36 of the container C to the sterilizing liquid L is shown as occurring with respect to what is referred to as an exterior spraying apparatus 101 disposed within the aseptic filling environment 1, wherein the exterior spraying apparatus 101 may be representative of any of the apparatuses suitable for performing any of the sterilization processes described hereinabove with regards to the sterilization of the exterior surface 36 via exposure to the sterilizing liquid L.

Following the formation of the container C, it is also necessary to subsequently remove the sterilizing liquid L from the interior 37 thereof in order to eventually facilitate the introduction of the end product P therein. Removal of the sterilizing liquid L may include the container C being inverted from the upright configuration (shown in FIG. 5) to allow the sterilizing liquid L to pour from the interior 37 by way of gravity feeding of the sterilizing liquid L. The pouring or draining of the sterilizing liquid L from the interior 37 of the container C may occur at the same time as the previously described step of exposing the exterior surface 36 of the container C to the sterilizing liquid L to allow the sterilizing liquid L contacting each of the interior surface 35 and the exterior surface 36 to be collected within a common liquid collection chamber. However, the removal of the sterilizing liquid L from the interior 37 of the container C may alternatively occur prior to or after the exposure of the exterior surface 36 to the sterilizing liquid L, as desired. The process of draining the sterilizing liquid L from the interior 37 of the container C is illustrated in FIG. 7 as occurring with respect to what is referred to as the container draining apparatus 102 of the aseptic filling environment 1. The container draining apparatus 102 may include a gripping of the container C along a portion of the container C, such as the support ring 38 thereof, the inversion of the container C, and then potentially a returning of the container C to the upright configuration, depending on the process steps occurring prior to or following the inversion of the container C.

The container C may further require the removal of any residue of the sterilizing liquid L following either of the above-described steps regarding the draining of the sterilizing liquid L from the interior 37 of the container C and/or the exposure of the exterior surface 36 to the sterilizing liquid L for sterilizing all possible exposed surfaces of the container C. The removal of the residue of the sterilizing liquid L may include rinsing the interior surface 35 and/or the exterior surface 36 of the container C using a rinsing liquid (sterilized water) that is delivered to the interior surface 35 and/or the exterior surface 36, which may include spraying the surfaces 35, 36 with the rinsing liquid, submerging the container C into a bath of the rinsing liquid for exposing the surfaces 35, 36 to the rinsing liquid, or filling the interior 37 of the container C with the rinsing liquid, which directly exposes the interior surface 35 to the rinsing liquid and potentially exposes the exterior surface 36 to the rinsing liquid when an overflow of the rinsing liquid occurs. Substantially any method of rinsing the container C may be utilized while remaining within the scope of the present invention. The process of rinsing the container C is illustrated in FIG. 7 as occurring with respect to what is referred to as the container rinsing apparatus 103 of the aseptic filling environment 1, which may be representative of any of the apparatuses described hereinabove as suitable in performing the rinsing of the container C. It should also be noted that in some circumstances it may not be necessary to perform the rinsing of the interior surface 35 of the container C where removal of the sterilizing liquid L is not required prior to filling the container C with an eventual end product, such as where the end product is in no way negatively impacted via contact with a small quantity of the sterilizing liquid L remaining within the interior 37 of the container C. The rinsing of internal and/or the external surfaces 35, 36 via use of the described container rinsing apparatus 103 may thus be considered optional in such circumstances, and the present invention should be considered to be inclusive of applications where such rinsing is not required following removal of the sterilizing liquid L from the container C upon formation thereof.

In some embodiments, the container C may be subjected to a drying process to remove any of the remaining rinsing liquid therefrom prior to the introduction of the end product P therein. The drying process may include the blowing of a heated gas (air) into the interior 37 of the container C and/or along the exterior surface 36 of the container C, as needed or desired. The process of drying the container C is illustrated in FIG. 7 as occurring with respect to what is referred to as the container drying apparatus 104 of the aseptic filling environment 1, which may be optionally included in the aseptic filling environment 1, as necessary.

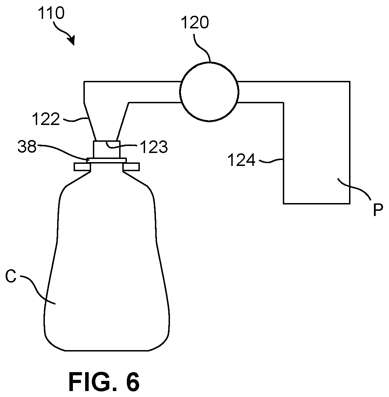

Once the container C is suitably sterilized, rinsed, and optionally dried, it is ready for the introduction of the end product P therein in accordance with any method of delivering the end product P into the interior 37 of the container C. FIG. 6 discloses one exemplary filling station 110 for delivering the end product P into the container C, wherein the end product P is typically a liquid or otherwise flowable commodity, such as a liquid beverage, a liquid cleaning product, or a flowable food material (such as a condiment, dressing, etc.), as non-limiting examples. It should be understood that substantially any flowable material may be utilized in filling the container C without necessarily departing from the scope of the present invention. The filling station 110 may once again be disposed within the aseptic filling environment 1 to avoid the introduction of contaminants prior to completion of the described method.

The filling station 110 is shown in simplified form in FIG. 6 and includes at least a fill head 122 and an end product source 124 having a volume of the end product P disposed therein. The filling station 110 may also utilize a fill pressure source 120 for delivering the end product P from the end product source 124 to the fill head 122 at a desired flow rate and/or pressure for filling the container C in a timely fashion during the filling process. Each of the fill head 122, the fill pressure source 120, and the end product source 124 may be associated with one or more valves (not shown) for controlling the flow of the end product P from the end product source 124 to an outlet 123 of the fill head 122, wherein the valves may be opened or closed to initiate and/or stop the transport of the end product P at any of the described components for ensuring a desired fill level of the end product P is achieved within the interior 37 of the container C. The fill head 122 may have a configuration suitable for mating with the open end of the container C providing access to the interior 37 thereof, such as the end of the portion of the container C extending outwardly from the support ring 38. The fill pressure source 120 may take any form, including but not limited to, a pump, a gravity feed, or a chamber having a moveable member such as a piston (similar to the disclosed configuration of the pressure source 20 of the mold station 10). The configuration of the entire filling station 110 may, in fact, resemble that disclosed in reference to the mold station 10 with the exception of the use of the stretch rod 26 employed in stretching the preform 12 to a desired length within the mold cavity 16 and venting any air from within the container C.

The prior sterilization of the container C allows the end product P to be introduced into the interior 37 of the container C at any desired temperature without negatively affecting the sterile condition of the container C. That is, in contrast to a hot filling process that relies upon the end product P being heated to a temperature ensuring the sterilization of the interior surface 35 of the container C following the introduction of the end product P therein, the interior surface 35 is already sterilized as a result of the simultaneous forming and filling thereof with the sterilizing liquid L. This allows both the sterilizing liquid L and the end product P to be introduced into the container C at any suitable temperature, including temperatures corresponding to room temperature or colder, without negatively affecting the sterilization of the container C. For example, the end product P may be introduced into the container C at a temperature between 32°F and 90°F, as non-limiting examples. The container C may, of course, also receive the end product P therein at an elevated temperature, as desired, without necessarily departing from the scope of the present invention.

Once filled to an acceptable fill level with the end product P, the container C may then be sealed to prevent the potential for the introduction of contaminants into the interior 37 thereof at an instance prior to the dispensing of the end product P from the container C by a consumer of the end product P. The sealing of the container C may be dependent on the configuration of the container C and the end product P contained therein, and may include the use of any form of enclosure for closing off the open end of the portion of the container C extending outwardly from the support ring 38 thereof. In some instances, the enclosure may be a threaded cap that is threadably received over threads of the container C adjacent the support ring 38, and in other instances the enclosure may be a casing covering the open end of the container C, such as a thin sheet-like material that may be tabbed to aid in removing the casing such as by peeling, or otherwise able to be pierced for gaining access to the interior 37 of the container C. The enclosure may include any combination of such sealing structures, as desired, so long as the interior 37 of the container C is sealed in a manner preventing the undesired entry of air or contaminants into the interior 37 following the manufacturing of the container C. In FIG. 7, the described sealing of the interior 37 of the container C is shown as being performed by a container enclosing apparatus 105 of the aseptic filling environment 1, which may be representative of any apparatus cable of performing any of the above methods of sealing and/or enclosing the interior 37 of the container C at the open end thereof following the introduction of the end product P therein.

Once fully manufactured and enclosed, the container C may be removed from the aseptic filling environment 1 or may be subjected to additional packaging steps within the aseptic filling environment 1, depending on the circumstances. Any additional packaging steps are omitted from FIG. 7, but should be understood to potentially occur therein, when appropriate.

Although not shown in the figures, it should be understood that the container C may be transported between the different apparatuses 10, 101, 102, 103, 104, 110, 105 forming the aseptic filling environment 1 via any suitable transport mechanism or combination of transport mechanisms while remaining within the scope of the present invention, including mechanisms such as transport wheels, conveyers, rails, or the like. The container C may be gripped or supported by any corresponding structure thereof, such as the support ring 38 shown in the present example.

Some advantages realized by the present teachings will now be discussed further.

The combination of both the blow and aseptic filling processes into one piece of equipment (injection mold station 10) may reduce handling parts and therefore lead to reduced capital cost per resultant plastic container C. In addition, the space required by a process that simultaneously blows and fills the resultant plastic container C with the sterilizing liquid L may be significantly reduced over the space required when the processes are separate and independently performed, such as blow molding the container C via gas and then introducing the sterilizing liquid L therein after the gaseous molding process. This may also result in lower infrastructure cost.

Integrating the two processes into a single step may reduce labor and additional costs (both capital and expense) associated with handling bottles after they are produced and before they are filled with the end product P.

Integrating the described processes and corresponding apparatuses into a single aseptic filling environment 1 eliminates the need to ship bottles or other similar containers. The shipping of bottles is inherently inefficient and expensive. Shipping preforms, on the other hand, is much more efficient. In one example, a trailer load of empty 500 ml water bottles contains approximately 100,000 individual bottles. The same size trailer loaded with preforms required to make 500 ml water bottles will carry approximately 1,000,000 individual preforms, a 10:1 improvement.

Compressed air is a notoriously inefficient means of transferring energy. Using the sterilizing liquid L to provide hydraulic pressure to blow the container will require the equivalent of a positive displacement pump. As a result, it is a much more efficient way to transfer energy and form the container C to the desired configuration.

In the exemplary method described herein, the preform 12 may be sterilized immediately following the entry into the aseptic filling environment 1, thereby eliminating the need to heat the preform 12 to a temperature corresponding to the sterilization of the preform 12 prior to the formation of the preform 12 into the container C. In this way, the preform 12 can be heated to any desired temperature corresponding to desirable qualities of the resulting container C, such as heating the preform 12 to a temperature below 212°F (100°C), which may in some circumstances be indicative of the temperature value at which such a preform 12 is considered to reasonably be free of bacterial contamination.

In some instances where products are hot filled as the method of ensuring sterilization, the container C must be designed to accommodate the elevated temperature that it is exposed to during filling and the resultant internal vacuum it is exposed to as a result of the end product P cooling within the interior 37 of the container C. A design that accommodates such conditions may require added container weight, increased thickness of the container C, and/or the use of moveable panels within the container walls to accommodate the changing pressure within the interior 37 as the end product P cools. The use of the sterilizing liquid L in expanding the preform at a relatively low temperature (such as room temperature) offers the potential of eliminating the hot fill process and as a result, lowering the container weight and complexity.

Another disadvantage of a hot filling process includes the possibility that the end product P may undesirably undergo a change in form when subjected to the relatively high temperatures necessary in suitably sterilizing the end product P. For example, it is possible that the heating of the end product P may lead to a reaction within the end product undesirably affecting a taste, texture, viscosity, shelf life, or coloration of the end product P, among other qualities, properties, or characteristics thereof. The described use of the sterilizing liquid L accordingly eliminates such a risk of alteration of the end product P via the ability to introduce the end product P at a relatively low temperature below a temperature consistent with such alterations occurring to the end product P, such as introducing the end product P at a temperature at or below room temperature.

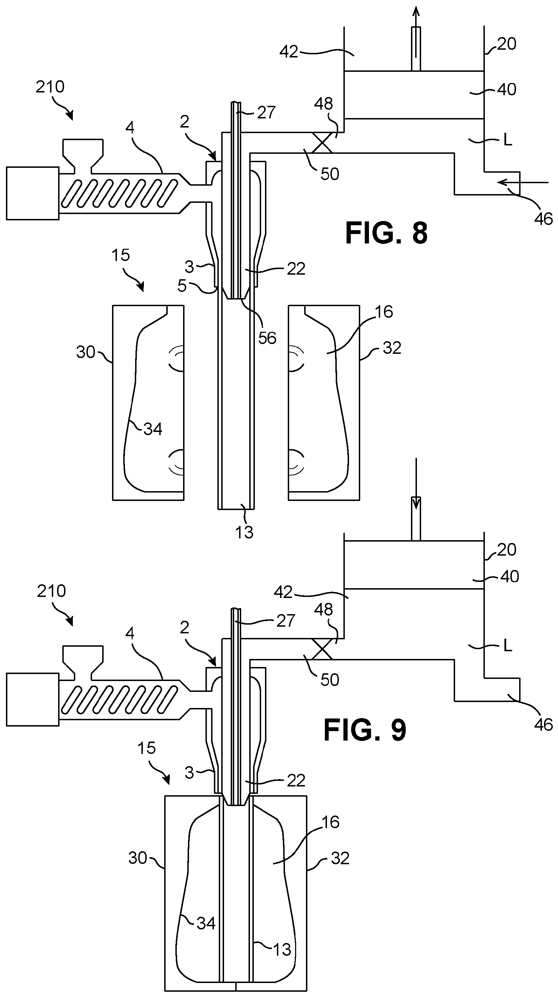

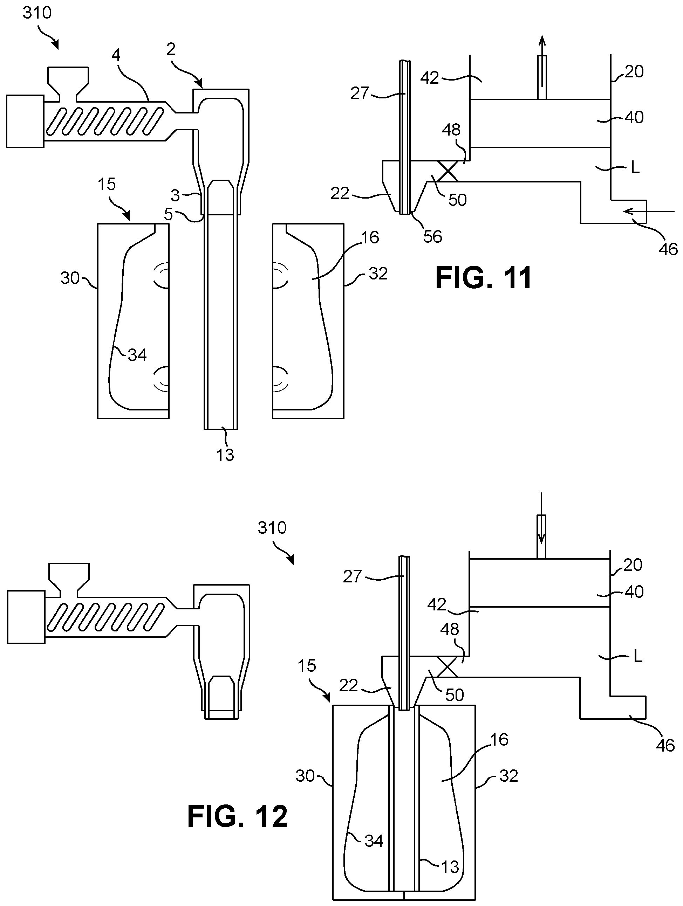

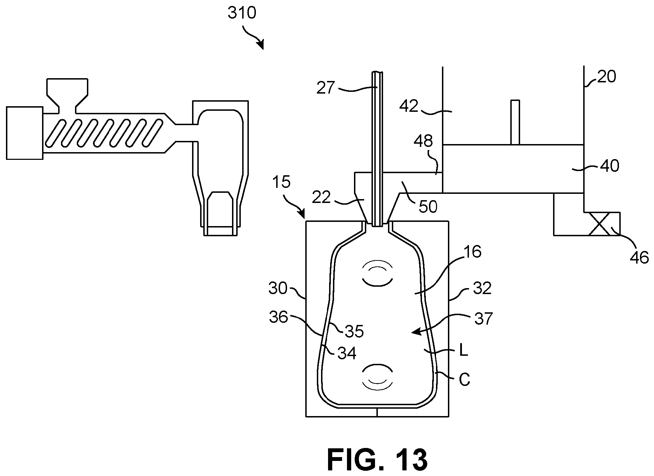

The present invention has thus far been described in reference to an injection blow molding process wherein a preform is expanded against a mold via the introduction of the sterilizing liquid L therein. However, as shown with respect to the two different embodiments shown throughout FIGS. 8-13, the present invention may alternatively be adapted for use in an extrusion blow molding process without departing from the scope of the present invention, wherein the sterilizing liquid L is once again utilized in applying the pressure necessary for expanding a parison 13 against a mold 15 to result in the formation of the container C. Specifically, FIGS. 8-10 illustrate an embodiment of an extrusion mold station 210 wherein the blow nozzle 22 for delivering the sterilizing liquid L is integrated into the structure of an extrusion die head 2, whereas FIGS. 11-13 illustrate an embodiment of an extrusion mold station 310 wherein the blow nozzle 22 is provided independently and spaced apart from the extrusion die head 2 such that transport of the parison 13 and/or the blow nozzle 22 is required between subsequent steps of the manufacturing process. The disclosed embodiments of the invention include substantially the same structural components as the injection mold station 10 of FIGS. 1-5 rearranged in various different suitable configurations, hence the same reference numerals apply to those elements having a shared structure and purpose between the different disclosed embodiments of the mold stations 10, 210, 310.

Each of the disclosed extrusion mold stations 210, 310 may utilize any of several known types of extrusion blow molding machines, such as an extrusion blow molding rotary wheel or an extrusion blow molding shuttle system. In each disclosed embodiment, an extrusion die head 2 is used to form a parison 13 of molten resin. At its lower end, the extrusion die head 2 has a die 3. Resin enters the extrusion die head 2 from a screw extruder 4, which is preferably a reciprocal screw extruder, to produce intermittent extrusion of the parison 13. Alternatively, any means to produce intermittent extrusion of the parison 13 can be used. At the lower end of the die 3, an annular resin outlet 5 enables a parison 13 of the molten resin having a substantially cylindrical shape (corresponding to a substantially circular cross-sectional shape) to be extruded from the extrusion die head 2. The resin outlet 5 and the parison 13 may include alternative corresponding cross-sectional shapes, as desired, without departing from the scope of the present invention. The resin outlet 5 is also illustrated as extending substantially axially at the lower end of the die 3, but it is understood that the resin outlet may have a converging geometry or a diverging geometry without departing from the scope of the present invention.

Each of the disclosed extrusion mold stations 210, 310 further includes the mold 15, the pressure source 20, and the blow nozzle 22 in similar fashion to the injection mold station 10, and further includes an air vent passageway 27 for venting air from within the parison 13 in similar fashion to the vented stretch rod 26 of FIGS. 1-5. The mold 15 defines an exemplary mold cavity 16 having mold halves 30, 32 that cooperate to define an interior surface 34 corresponding to a desired outer profile of a blown container. Additionally, the mold 15 of the illustrated embodiment is further illustrated as having structure for introducing an opening into a central portion of the parison 13 for forming a feature such as a handle of the resultant container, although inclusion of such a feature is in no way limiting to the present invention. The mold 15 may be moveable from an open position (see FIG. 8) to a closed position (FIG. 9) such that the extruded portion of the parison 13 is captured within the mold cavity 16. Depending on the configuration of the mold 15, the capturing of the portion of the parison 13 may include a shearing of a portion of the parison 13, such as a bottom portion of the parison 13 or the central portion of the parison 13, removed when forming the handle of the container.

In each of the disclosed extrusion mold stations 210, 310, the blow nozzle 22 generally defines an inlet 50 for accepting the liquid commodity L from the outlet 48 of the pressure source 20 and an outlet 56 for delivering the liquid commodity L into the parison 13 when the parison 13 is captured within the mold cavity 16. It is appreciated that the outlet 56 may define a shape complementary to an open end of the parison 13 or an opening formed by the mold 15 such that the blow nozzle 22 may easily sealingly mate with the parison 13 and/or the mold 15 during the forming/filling process. The air vent passageway 27 formed through the blow nozzle 22 is used to initiate venting of the air contained within the interior of the parison 13 when the sterilizing liquid L is introduced therein and displaces the air therefrom. In other embodiments, the blow nozzle 22 may be formed by a needle (not shown) or similar puncturing mechanism suitable for penetrating the parison 13 or the resultant container C formed following the inflation of the container, wherein the needle or puncturing mechanism further defines a flow path for delivering the sterilizing liquid L to the interior of the parison 13. The needle or puncturing mechanism may allow the sterilizing liquid L to be introduced into the interior of the parison 13 and/or the finished container C at any desired location thereon, such as within flash material formed during the manufacturing of the container at or adjacent a seam of the finished container C.

An exemplary method of simultaneously forming and filling the container will be described initially with reference to the extrusion mold station 210 illustrated in FIGS. 8-10. The method includes continuously or intermittently extruding the plastic parison 13 from the extrusion die head 2, and periodically capturing a length of the extruded parison 13 within the movable mold 15 in a manner that is conventional for extrusion blow molding processes. As the parison 13 is located into the mold cavity 16, the piston-like device 40 of the pressure source 20 may begin to draw the sterilizing liquid L into the filling cylinder, manifold, or chamber 42 through the inlet 46. The mold halves 30, 32 of the mold cavity 16 may then close, thereby capturing the portion of the parison 13 within the mold cavity 16.

The blow nozzle 22 may then form a seal at an open end of the parison 13 and/or an open portion of the mold 15. The mold cavity 16 may be heated to a temperature between approximately 250°F to 350°F (approximately 93°C to 177°C) in order to impart increased crystallinity levels within the resultant container C. In another example, the mold cavity may be provided at ambient or cold temperatures between approximately 32° F to 90° F (approximately 0°C to 32°C). The sterilizing liquid L may continue to be drawn into the filling cylinder, manifold, or chamber 42 by upward motion of the piston-like device 40.

Next, the piston-like device 40 may begin to drive downward (drive phase) to initiate the rapid transfer of the sterilizing liquid L from the filling cylinder, manifold, or chamber 42 to the interior of the captured portion of the parison 13. Again, the piston-like device 40 may be actuated by any suitable means such as pneumatic, mechanical, and/or hydraulic pressure. In one example, the hydraulic pressure within the parison 13 may reach between approximately 100 PSI to 600 PSI. The sterilizing liquid L causes the parison 13 to expand toward the interior surface 34 of the mold cavity 16. The sterilizing liquid L contacting the parison 13 also causes the cooling of the parison 13. By cooling the parison 13 with the sterilizing liquid L, energy costs and concerns associated with cooling the mold 15 are reduced, if not eliminated.

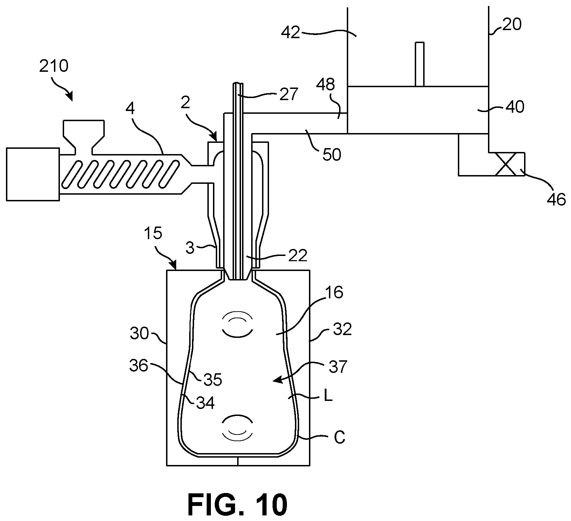

The piston-like device 40 has completed its drive phase thereby completely transferring the appropriate volume of the sterilizing liquid L to the newly formed plastic container C. This creates a container blank that includes a main body portion and any other features, such as a central recess, a handle, or the like, as well as additional flash material in the areas that correspond to the seam that exists between the two mold portions and/or the flash material corresponding to the opening and/or closure portion of the container C. The sterilizing liquid L may be introduced into the open end of the parison 13 as shown in FIGS. 9 and 10. After formation, the container blank is cooled within the mold 15 prior to removal therefrom.

The extrusion mold station 210 having the integrated blow nozzle 22 and extrusion die head 2 illustrated in FIGS. 8-10 provides the advantage of requiring fewer components while also removing the need to shuttle the mold 15 and/or the blow nozzle 22 from one component to another, thereby simplifying operation of the mold station 210. The blow nozzle 22 is shown as extending axially through the extrusion die head 2 while arranged concentrically relative to the resin outlet 5, but any configuration suitable for directing the sterilizing liquid L to a position disposed radially inwardly of the resin outlet 5 may be utilized for the blow nozzle 22 without necessarily departing from the scope of the present invention. The blow nozzle 22 may be routed through the extrusion die head 2 in a manner preventing interference with the flow of the extruded plastic adjacent the resin outlet 5, as desired.

The extrusion mold station 310 illustrated in FIGS. 11-13 includes substantially identical structure to the extrusion mold station 210 with the exception of the separation of the extrusion die head 2 from the blow nozzle 22. As such, the mold 15 may be in need of shuttling between a position in axial alignment with the extrusion die head 2 to a position in axial alignment with the blow nozzle 22 between subsequent steps of a forming and filling process performed by the mold station 310. Specifically, the mold 15 may be positioned in alignment with the extrusion die head 2 while in the open position before being moved to the closed position in order to capture the portion of the parison 13 when a sufficient length of the parison 13 has been extruded from the extrusion die head 2. Following the capturing of the parison 13, the mold 15 is transported to the position in alignment with the blow nozzle 22 to facilitate the sealing engagement between the blow nozzle 22 and the parison 13 and/or mold 15. During the capturing of the parison 13 and the transport of the mold 15, the piston-like device 40 of the pressure source 20 may begin an upstroke to facilitate the entry of the sterilizing liquid L into the chamber 42. The piston-like device 40 may then perform the downstroke thereof to introduce the pressurized sterilizing liquid L into the interior of the parison 13 following sealing engagement of the blow nozzle 22 thereto. The introduction of the pressurized sterilizing liquid L causes the inflation of the parison 13 against the interior surface 34 defining the mold cavity 16. Following the inflation of the parison 13, the mold 15 may be moved once again to the open position in order to release the resultant container C. The mold 15 may then be repositioned in alignment with the extrusion die head 2 when in the open position to prepare the mold 15 for capturing the next length of the extruded parison 13 projecting out of the extrusion die head 2.

With renewed reference to FIG. 7, either of the extrusion mold stations 210, 310 shown and described herein with reference to FIGS. 8-13 may be substituted for the injection mold station 10 of FIGS. 1-5 with respect to the disclosed aseptic filling environment 1 with all remaining apparatuses and methods remaining substantially the same as previously described. That is, once the container C is formed by the extrusion blow molding process of either of FIGS. 8-10 or FIGS. 11-13, the container C may be transported to any of the described apparatuses 101, 102, 103, 104, 110, 105 for sterilizing all exposed surfaces of the container C, draining the sterilizing liquid L from the container C, rinsing the container C, optionally drying the rinsed container C, filling the container C with the end product P, and sealing the opening of the container C in the same manner as described with reference to the injection mold station 10 and the filling station 110, hence further description of such processes is omitted herefrom. The substitution of the extrusion molding process for the injection molding process may also result in the same advantages as described above for substantially the same reasons, hence description of the advantages of the use of either of the extrusion mold stations 210, 310 is similarly omitted herefrom.

While much of the description has focused on the production of PET containers, it is contemplated that other polyolefin materials (e.g., polyethylene, polypropylene, etc.) as well as a number of other plastics may be processed using the teachings discussed herein.

While the above description constitutes the present disclosure, it will be appreciated that the disclosure is susceptible to modification, variation, and change without departing from the proper scope and fair meaning of the accompanying claims.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments can be embodied in many different forms, and that neither should be construed to limit the scope of the disclosure. In some example embodiments, well-known processes, well-known device structures, and well-known technologies are not described in detail. Equivalent changes, modifications and variations of some embodiments, materials, compositions and methods can be made within the scope of the present technology, with substantially similar results.

## Claims

1. A method of forming and sterilizing a container comprising:
locating a container precursor within a mold cavity having an internal surface; and
dispensing a sterilizing liquid into the container precursor to expand the container precursor toward the internal surface of the mold cavity to form a resultant container having an interior defined by an interior surface of the resultant container, the sterilizing liquid sterilizing the interior surface of the resultant container during the dispensing of the sterilizing liquid.

2. The method of Claim 1, wherein the sterilizing liquid is one of peracetic acid or peroxide.

3. The method of Claim 1 or Claim 2, wherein the sterilizing liquid is dispensed into the container precursor at a temperature between 32°F and 90°F.

4. The method of any preceding Claim, wherein the container precursor is a preform and the sterilizing liquid is dispensed into the preform as a step of an injection blow molding process.

5. The method of any preceding Claim, wherein the container precursor is a parison and the sterilizing liquid is dispensed into the parison as a step of an extrusion blow molding process.

6. The method of any preceding Claim, wherein the dispensing of the sterilizing liquid is performed by a blow nozzle sealingly engaging the container precursor, optionally further comprising a step of providing the sterilizing liquid to the blow nozzle using a pressure source, further optionally wherein the pressure source has an inlet, a chamber, an outlet, and a mechanically driven piston-like device moveable within the chamber in a first direction to draw the sterilizing liquid into the chamber through the inlet and moveable in a second direction to urge the sterilizing liquid out of the chamber through the outlet, further further optionally wherein the piston-like device is one of a piston, a pump, and an accumulator.

7. The method of any preceding Claim, wherein expanding the container precursor toward the internal surface of the mold cavity using the sterilizing liquid to form a resultant container includes venting the container precursor.

8. The method of any preceding Claim, further comprising a step of draining the sterilizing liquid from the interior of the resultant container, optionally wherein the draining of the sterilizing liquid from the interior of the resultant container includes inverting the resultant container to drain the sterilizing liquid by gravity.

9. The method of any preceding Claim, further comprising a step of exposing an exterior surface of the resultant container to the sterilizing liquid to sterilize the exterior surface of the resultant container.

10. The method of any preceding Claim, further comprising a step of rinsing the interior surface of the resultant container using a rinsing liquid different from the sterilizing liquid, optionally wherein the rinsing liquid is sterilized water.

11. The method of any preceding Claim, further comprising a step of replacing the sterilizing liquid disposed within the interior of the resultant container with an end product.

12. The method of Claim 11, wherein the end product is a flowable beverage or flowable food item.

13. The method of Claim 11 or Claim 12, wherein the end product is introduced into the interior of the resultant container using a filling station having a fill head, a fill pressure source, and a source of the end product.

14. The method of any of Claims 11 to 13, further comprising a step of sealing the interior of the resultant container following the introduction of the end product therein.

15. A method of forming and sterilizing a container comprising:
locating a container precursor within a mold cavity having an internal surface;
dispensing a sterilizing liquid into the container precursor to expand the container precursor toward the internal surface of the mold cavity to form a resultant container having an interior defined by an interior surface of the resultant container, the sterilizing liquid sterilizing the interior surface of the resultant container during the dispensing of the sterilizing liquid;
draining the sterilizing liquid from the interior of the resultant container;
rinsing the interior of the resultant container with a rinsing liquid following the draining of the sterilizing liquid;
dispensing an end product into the interior of the resultant container following the rinsing of the interior of the resultant container; and
sealing the interior of the resultant container following the dispensing of the end product therein.
